# EUROPÄISCHE PATENTSCHRIFT

(11) **EP 4 619 282 B1**
(45) Veröffentlichungstag und Bekanntmachung des Hinweises auf die Patenterteilung: **26.08.2026**
(21) Anmeldenummer: 23787107.4
(22) Anmeldetag: 10.10.2023
(51) Int. Cl.: B60S 1/08, B60S 1/52, B60S 1/56, B60W 40/08

(54) **VERFAHREN ZUM BETRIEB EINER SCHEIBENREINIGUNGSANLAGE EINES FAHRZEUGS**
METHOD FOR OPERATING A WINDOW CLEANING SYSTEM OF A VEHICLE
PROCÉDÉ D'EXPLOITATION D'UN SYSTÈME DE NETTOYAGE DE VITRE D'UN VÉHICULE

(30) Priorität: 18.11.2022 DE 102022004287
(43) Veröffentlichungstag der Anmeldung: 24.09.2025
(73) Patentinhaber: Mercedes-Benz Group AG, 70372 Stuttgart (DE)
(72) Erfinder: KÖHLER, Malte, Jonas, 71116 Gärtringen (DE); BAUMEISTER, Markus, 71034 Böblingen (DE)
(74) Vertreter: Novagraaf Group
(86) Internationale Anmeldenummer: PCT/EP2023/078012
(87) Internationale Veröffentlichungsnummer: WO 2024/104654

(56) Entgegenhaltungen:
- EP-A1- 3 141 440
- JP-A- 2017 210 019
- US-A1- 2016 096 512
- US-A1- 2018 229 692
- US-A1- 2021 402 958

## Beschreibung

Die Erfindung betrifft ein Verfahren zum Betrieb einer Scheibenreinigungsanlage eines Fahrzeugs nach den Merkmalen des Oberbegriffs des Anspruchs 1.

Aus dem Stand der Technik ist, wie in der DE 10 2012 014 445 A1 beschrieben, ein Verfahren zum Betreiben einer Scheibenreinigungsanlage eines Fahrzeugs bekannt. In diesem Verfahren wird mittels eines Sensors ein Vorliegen von Schmutz und/oder Nässe auf einer Scheibe des Fahrzeugs erfasst. In Abhängigkeit von einem Signal des wenigstens einen Sensors wird die Scheibe mit einer Waschflüssigkeit beaufschlagt.

In der DE 100 10 434 B4 werden eine Kameravorrichtung zur Überwachung des rückwärtigen Fahrraums eines Fahrzeugs beschrieben. An dem Fahrzeug sind mindestens drei Bremswarnleuchten angeordnet, wobei die dritte Bremswarnleuchte einen größeren Abstand zu einem Fahrweg des Fahrzeugs aufweist als die erste und die zweite Bremswarnleuchte. Die Kameravorrichtung ist an der dritten Bremswarnleuchte angeordnet. An dieser dritten Bremswarnleuchte ist zudem eine zweite Kameravorrichtung angeordnet. Von der ersten und der zweiten Kameravorrichtung aufgenommene Bildsignale werden einer Auswerteeinheit zugeführt. Von der Auswerteeinheit wird eine stereoskopische Bildauswertung der von der ersten und der zweiten Kameravorrichtung erfassten Bilder durchgeführt. JP-A-2017/210019 offenbart ein ähnliches Verfahren.

Der Erfindung liegt die Aufgabe zu Grunde, ein gegenüber dem Stand der Technik verbessertes Verfahren zum Betrieb einer Scheibenreinigungsanlage eines Fahrzeugs anzugeben.

Die Aufgabe wird erfindungsgemäß gelöst durch ein Verfahren zum Betrieb einer Scheibenreinigungsanlage eines Fahrzeugs mit den Merkmalen des Anspruchs 1.

Vorteilhafte Ausgestaltungen der Erfindung sind Gegenstand der Unteransprüche.

In einem Verfahren zum Betrieb einer Scheibenreinigungsanlage eines Fahrzeugs ist vorgesehen, dass die Scheibenreinigungsanlage mindestens einen Scheibenwischer aufweist, der in einem Normalbetriebsmodus der Scheibenreinigungsanlage einen vorgegebenen Gesamtabschnitt einer Scheibe des Fahrzeugs überstreicht, d. h. über diesen Gesamtabschnitt hinwegbewegt wird.

Hierzu wird der Scheibenwischer insbesondere mittels eines Motors, insbesondere mittels eines Elektromotors, angetrieben. Die Bewegung des Scheibenwischers erfolgt insbesondere in Form einer Schwenkbewegung. Die Bewegung des Scheibenwischers erfolgt insbesondere durch eine entsprechende Steuerung und/oder Regelung des Motors. Der Scheibenwischer wird beispielsweise bei Wasser, Schnee und/oder Schmutz auf der Scheibe bewegt, d. h. die Scheibenreinigungsanlage ist vorteilhafterweise zur Reinigung der Scheibe von Wasser, Schnee und/oder Schmutz und/oder anderen Belägen vorgesehen. Die Steuerung des Motors erfolgt beispielsweise automatisch gemäß Signalen mindestens eines Scheibenreinigungssensors des Fahrzeugs, insbesondere eines Regensensors. Dieser Scheibenreinigungssensor erfasst Wasser, insbesondere Regen, Schnee und/oder Schmutz und/oder andere Beläge und aktiviert dann den Motor, um den Scheibenwischer zu bewegen. Je nach Intensität des Regens, Schneefalls und/oder der Verschmutzung und/oder der anderen Beläge kann dann entsprechend eine langsame oder schnelle Bewegung des Scheibenwischers oder eine Intervallbewegung des Scheibenwischers erfolgen, d. h. mit einer Pause zwischen zwei aufeinanderfolgenden Bewegungen. Dabei können mehrere Geschwindigkeiten der Bewegung und/oder verschiedene Pausenzeiten während der Intervallbewegung vorgesehen sein.

Die Scheibe ist insbesondere eine Windschutzscheibe des Fahrzeugs, auch als Frontscheibe bezeichnet.

Die Scheibenreinigungsanlage ist insbesondere eine Scheibenwisch- und Scheibenwascheinrichtung, welche somit insbesondere eine Reinigungs- und Wischfunktion aufweist.

Erfindungsgemäß ist vorgesehen, dass der vorgegebene Gesamtabschnitt, den der Scheibenwischer im Normalbetriebsmodus der Scheibenreinigungsanlage überstreicht, einen Sichtbereich eines Fahrzeugnutzers und einen Sichtbereich einer Sensorik, die zur Durchführung eines automatisierten Fahrbetriebs, insbesondere eines hochautomatisierten oder autonomen Fahrbetriebs, des Fahrzeugs erforderlich ist, umfasst. Die Sensorik umfasst insbesondere eine Kamera, beispielsweise eine Stereokamera oder Monokamera. Das Fahrzeug ist somit zu diesem automatisierten Fahrbetrieb fähig und erfordert hierfür diese Sensorik. Unter dem Begriff Sichtbereich ist hier insbesondere ein Durchsichtbereich der Scheibe zu verstehen, d. h. der Sichtbereich des Fahrzeugnutzers ist ein Durchsichtbereich der Scheibe, welcher zum Hindurchsehen des Fahrzeugnutzers vorgesehen ist, und der Sichtbereich der Sensorik ist ein Durchsichtbereich der Scheibe, durch welchen hindurch die Sensorik insbesondere eine äußere Fahrzeugumgebung des Fahrzeugs, insbesondere vor dem Fahrzeug, erfasst. Des Weiteren ist erfindungsgemäß vorgesehen, dass ermittelt wird, ob sich das Fahrzeug im automatisierten Fahrbetrieb befindet und ob der Fahrzeugnutzer unaufmerksam ist.

Beispielsweise ist vorgesehen, dass ein ermitteltes Schlafen des Fahrzeugnutzers und/oder ein ermittelter von der Scheibe abgewandter Blick des Fahrzeugnutzers und/oder eine ermittelte nicht vorliegende Fokussierung des Blicks des Fahrzeugnutzers auf die Fahrzeugumgebung außerhalb des Fahrzeugs vor der Scheibe als Unaufmerksamkeit des Fahrzeugnutzers ermittelt wird. Die Unaufmerksamkeit des Fahrzeugnutzers wird beispielsweise mittels einer Fahrzeugnutzerbeobachtungskamera ermittelt.

Erfindungsgemäß ist vorgesehen, dass dann, wenn ermittelt wird, dass sich das Fahrzeug im automatisierten Fahrbetrieb befindet, und wenn zudem ermittelt wird, dass der Fahrzeugnutzer unaufmerksam ist, die Scheibenreinigungsanlage in einem Sonderbetriebsmodus betrieben wird, in welchem der Scheibenwischer ausschließlich einen vorgegebenen Teilabschnitt des Gesamtabschnitts überstreicht oder diesen Teilabschnitt öfter überstreicht als einen restlichen Teil des Gesamtabschnitts, wobei dieser Teilabschnitt den Sichtbereich der Sensorik umfasst. Der Teilabschnitt ist somit nur ein Teil des Gesamtabschnitts und somit kleiner als der Gesamtabschnitt.

In dem erfindungsgemäßen Verfahren ist somit insbesondere vorgesehen, dass Situationen erkannt werden, in denen das Fahrzeug sich im automatisierten Fahrbetrieb befindet und in denen der Fahrzeugnutzer nicht aufmerksam ist.

Bei Erkennung solcher Situationen ist insbesondere vorgesehen, dass die Funktion der Scheibenreinigungsanlage individuell für den Teilabschnitt und für den restlichen Teil des Gesamtabschnitts und somit insbesondere für den Sichtbereich der Sensorik und für den Sichtbereich des Fahrzeugnutzers derart gesteuert wird, dass eine Wisch- und Reinigungsqualität im Teilabschnitt und somit insbesondere im Sichtbereich der Sensorik besser ist als im restlichen Teil des Gesamtabschnitts und somit insbesondere im Sichtbereich des Fahrzeugnutzers.

Die Freihaltung der Sensorik von Wasser, Schnee, Schmutz und anderen Belägen ist für die Durchführung des automatisierten Fahrbetriebs von elementarer Bedeutung. Oft ist dies jedoch problematisch hinsichtlich Zeit, hinsichtlich eines Verbrauchs einer Reinigungsflüssigkeit und/oder hinsichtlich eines Energieverbrauchs der Scheibenreinigungsanlage, insbesondere bei schlechten, insbesondere langanhaltend schlechten, Witterungsbedingungen, beispielsweise bei starkem Regen und/oder sonstigen Verschmutzungen, zum Beispiel durch von vorausfahrenden Fahrzeugen von einer Fahrbahn aufgewirbeltes verschmutztes Wasser. Durch die erfindungsgemäße Lösung werden diese Probleme behoben oder zumindest reduziert, da dann, wenn der Fahrzeugnutzer im automatisierten Fahrbetrieb unaufmerksam ist und dessen Sichtbereich daher nicht gereinigt werden muss, ausschließlich oder bevorzugt der Teilabschnitt gereinigt wird. Dadurch ist ein Bewegungsweg des Scheibenwischers und somit ein Energieverbrauch der Scheibenreinigungsanlage geringer, der Scheibenwischer kann den Teilabschnitt bei gleicher Geschwindigkeit öfter überstreichen und ein Verbrauch von Reinigungsflüssigkeit kann reduziert werden, wodurch ein geringerer Vorrat an Reinigungsflüssigkeit mitgeführt werden muss und ein kleinerer bauraumsparender Reinigungsflüssigkeitstank verbaut werden kann, oder bei gleichbleibendem Vorrat eine größere Reichweite des Fahrzeugs ohne Nachfüllen der Reinigungsflüssigkeit ermöglicht wird.

Das erfindungsgemäße Verfahren ermöglicht somit eine höhere Effizienz bezüglich des Freihaltens der Sensorik. Beispielsweise kann bei starkem Regen die Sensorik schneller freigehalten werden, wenn dies sonst durch eine maximal mögliche Geschwindigkeit der Bewegung des Scheibenwischers limitiert wäre. Dadurch kann eine Verfügbarkeit des automatisierten Fahrbetriebs erhöht werden, da dieser dann auch bei starkem Regen durchgeführt werden kann.

Im hier beschriebenen Verfahren ist insbesondere vorgesehen, dass der Scheibenwischer im Normalbetriebsmodus von einer vorgegebenen Normalstartposition zu einer vorgegebenen Normalwendeposition und zurück bewegt wird, insbesondere mehrfach, insbesondere fortlaufend oder als Intervallbewegung, und im Sonderbetriebsmodus von einer vorgegebenen Sonderstartposition zu einer vorgegebenen Sonderwendeposition und zurück bewegt wird, insbesondere mehrfach, insbesondere fortlaufend oder als Intervallbewegung. Dabei ist der Bewegungsweg, insbesondere ein Schwenkweg, des Scheibenwischers von der Sonderstartposition zu der Sonderwendeposition geringer als von der Normalstartposition zu der Normalwendeposition. Dabei kann beispielsweise vorgesehen sein, dass die Sonderstartposition der Normalstartposition entspricht und die Sonderwendeposition von der Normalwendeposition abweicht, oder dass die Sonderwendeposition der Normalwendeposition entspricht und die Sonderstartposition von der Normalstartposition abweicht, oder dass die Sonderstartposition von der Normalstartposition abweicht und die Sonderwendeposition von der Normalwendeposition abweicht. Die Sonderstartposition ist, wenn sie von der Normalstartposition abweicht, insbesondere in Richtung der Normalwendeposition versetzt positioniert. Die Sonderwendeposition ist, wenn sie von der Normalwendeposition abweicht, insbesondere in Richtung der Normalstartposition versetzt positioniert. Die Sonderstartposition und die Sonderwendeposition und somit der Teilabschnitt werden insbesondere derart vorgegeben, dass der Teilabschnitt den Sichtbereich der Sensorik vollständig umfasst und möglichst klein ist, um die oben beschriebenen Vorteile optimal zu erreichen.

In einer möglichen Ausführungsform des Verfahrens ist vorgesehen, dass der Scheibenwischer zu Beginn des Sonderbetriebsmodus von der Normalstartposition zur Sonderstartposition bewegt wird und während des Sonderbetriebsmodus ausschließlich in der Sonderstartposition angehalten wird. Dies erfolgt insbesondere dann, wenn die Sonderstartposition von der Normalstartposition abweicht. Im Normalbetriebsmodus befindet sich der Scheibenwischer, wenn er stillsteht, in der Normalstartposition. Bei Wechsel in den Sonderbetriebsmodus ist somit zunächst das Bewegen des Scheibenwischers in die Sonderstartposition erforderlich. Er kehrt dann während des Sonderbetriebsmodus nicht in die Normalstartposition zurück, d. h. auch nicht im Stillstand, sondern verbleibt im Stillstand in der Sonderstartposition. Erst bei Beendigung des Sonderbetriebsmodus, d. h. wenn die oben genannten Bedingungen für den Sonderbetriebsmodus nicht mehr erfüllt sind, wird der Scheibenwischer wieder in die Normalstartposition zurückbewegt.

In einer möglichen Ausführungsform des Verfahrens ist vorgesehen, dass im Sonderbetriebsmodus die oben bereits erwähnte Reinigungsflüssigkeit ausschließlich auf den Teilabschnitt aufgesprüht wird oder mehr Reinigungsflüssigkeit auf den Teilabschnitt als auf den restlichen Teil des Gesamtabschnitts aufgesprüht wird oder die Reinigungsflüssigkeit öfter auf den Teilabschnitt als auf den restlichen Teil des Gesamtabschnitts aufgesprüht wird. Dadurch werden die oben bereits erwähnten Vorteile bezüglich des Verbrauchs der Reinigungsflüssigkeit und des kleineren erforderlichen Vorrats oder der längeren Reichweite bei gleichem Vorrat erzielt. Das Versprühen der Reinigungsflüssigkeit erfolgt insbesondere automatisch, insbesondere durch Steuern und/oder Regeln einer Förderpumpe für die Reinigungsflüssigkeit und/oder durch Steuern und/oder Regeln einer oder mehrerer Sprühdüsen, insbesondere eines Öffnens und Schließens der jeweiligen Sprühdüse.

In einer möglichen Ausführungsform des Verfahrens ist vorgesehen, dass im Sonderbetriebsmodus die Reinigungsflüssigkeit ausschließlich auf einen Teilbereich des Teilabschnitts aufgesprüht wird oder mehr Reinigungsflüssigkeit auf den Teilbereich des Teilabschnitts als auf den restlichen Teil des Teilabschnitts und/oder den restlichen Teil des Gesamtabschnitts aufgesprüht wird oder die Reinigungsflüssigkeit öfter auf den Teilbereich des Teilabschnitts als auf den restlichen Teil des Teilabschnitts und/oder den restlichen Teil des Gesamtabschnitts aufgesprüht wird, wobei dieser Teilbereich den Sichtbereich der Sensorik umfasst. Der Teilbereich ist somit nur ein Teil des Teilabschnitts und somit kleiner als der Teilabschnitt. Dadurch kann der Verbrauch der Reinigungsflüssigkeit weiter reduziert werden, da vorteilhafterweise nur noch der relativ kleine Teilbereich des Teilabschnitts mit der Reinigungsflüssigkeit besprüht wird.

Um dies zu ermöglichen, sind beispielsweise am Scheibenwischer, insbesondere an einem Wischerblatt des Scheibenwischers, mehrere Sprühdüsen zum Aufsprühen der Reinigungsflüssigkeit auf die Scheibe angeordnet, insbesondere über eine Länge des Scheibenwischers, insbesondere des Wischerblatts, verteilt. Diese Verteilung kann beispielsweise gleichmäßig sein oder im Bereich des Scheibenwischers, insbesondere des Wischerblatts, der den Sichtbereich der Sensorik überstreicht, können mehr Sprühdüsen angeordnet sein als im restlichen Bereich des Scheibenwischers, insbesondere des Wischerblatts, um eine weiter verbesserte Reinigungswirkung für den Sichtbereich der Sensorik zu erreichen.

In einer möglichen Ausführungsform des Verfahrens kann dann vorgesehen sein, dass im Sonderbetriebsmodus die Reinigungsflüssigkeit ausschließlich aus der Sprühdüse oder aus den Sprühdüsen auf die Scheibe aufgesprüht wird, die sich, durch die Bewegung des Scheibenwischers, über den Teilabschnitt hinwegbewegt/hinwegbewegen. Insbesondere kann vorgesehen sein, dass im Sonderbetriebsmodus die Reinigungsflüssigkeit ausschließlich aus der Sprühdüse oder aus den Sprühdüsen auf die Scheibe aufgesprüht wird, die sich, durch die Bewegung des Scheibenwischers, über den Teilbereich des Teilabschnitts hinwegbewegt/hinwegbewegen, um die Reduzierung des Verbrauchs der Reinigungsflüssigkeit zu optimieren. Beispielsweise wird/werden die entsprechende Sprühdüse oder die entsprechenden Sprühdüsen hierfür aktiviert, d. h. geöffnet, um die Reinigungsflüssigkeit zu versprühen, und die eine oder mehreren anderen Sprühdüsen bleiben deaktiviert, d. h. geschlossen.

Wie oben beschrieben, weist die Scheibenreinigungsanlage mindestens einen Scheibenwischer auf. Sie kann auch zwei oder mehr Scheibenwischer aufweisen. Für diesen Fall gilt die obige Beschreibung für die Gesamtheit der Scheibenwischer. Insbesondere der Gesamtabschnitt, der Teilabschnitt und der Teilbereich werden dann von der Gesamtheit der Scheibenwischer überstrichen, sie setzten sich somit jeweils insbesondere aus von den einzelnen Scheibenwischern überstrichenen Abschnitten bzw. Bereichen zusammen, wobei Teile davon von mehreren der Scheibenwischer überstrichen werden können.

Der Sonderbetriebsmodus wird, zusätzlich zu den oben genannten Bedingungen, beispielsweise erst dann aktiviert, wenn, insbesondere anhand der Signale des Scheibenreinigungssensors, ein Bedarf zum Reinigen der Scheibe, d. h. zum Wischbewegen des Scheibenwischers und/oder zum Sprühen der Reinigungsflüssigkeit, erkannt wird, d. h. wenn, insbesondere mittels des Scheibenreinigungssensors Wasser, insbesondere Regen, Schnee und/oder Schmutz und/oder andere Beläge auf der Scheibe erfasst werden. Das Deaktivieren des Sonderbetriebsmodus erfolgt dann vorteilhafterweise erst dann, wenn die oben genannten Bedingungen bezüglich des Fahrzeugnutzers und des automatisierten Fahrbetriebs nicht mehr erfüllt sind. Insbesondere ist vorgesehen, dass der Scheibenwischer, wenn kein Bedarf zum Reinigen der Scheibe mehr erkannt wird, jedoch der Sonderbetriebsmodus aufgrund der weiterhin vorliegenden Bedingungen bezüglich des Fahrzeugnutzers und des automatisierten Fahrbetriebs weiterhin besteht, in der Sonderstartposition angehalten wird und dort stehenbleibt, bis erneut Bedarf zum Reinigen der Scheibe besteht oder bis der Sonderbetriebsmodus beendet wird und vorteilhafterweise wieder der Normalbetriebsmodus aktiviert wird, da zumindest eine der oben genannten Bedingungen für den Sonderbetriebsmodus bezüglich des Fahrzeugnutzers und des automatisierten Fahrbetriebs nicht mehr besteht. Wird der Sonderbetriebsmodus beendet, dann wird der Scheibenwischer in die Normalstartposition zurückbewegt.

Ausführungsbeispiele der Erfindung werden im Folgenden anhand von Zeichnungen näher erläutert.

Dabei zeigen:
- Fig. 1: schematisch einen Normalbetriebsmodus einer Scheibenreinigungsanlage eines Fahrzeugs, und
- Fig. 2: schematisch einen Sonderbetriebsmodus der Scheibenreinigungsanlage.

Einander entsprechende Teile sind in allen Figuren mit den gleichen Bezugszeichen versehen.

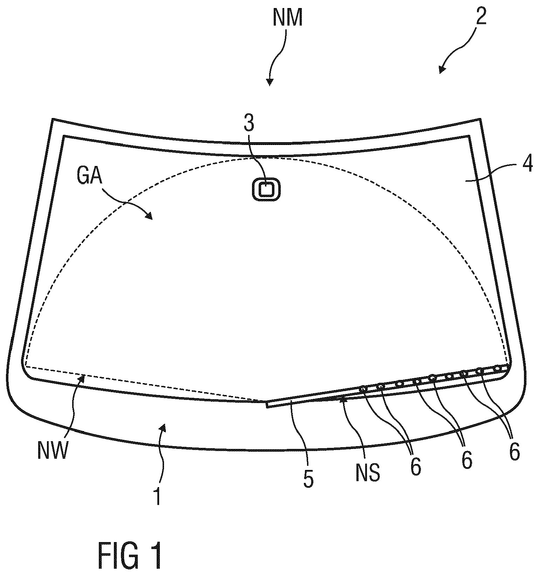

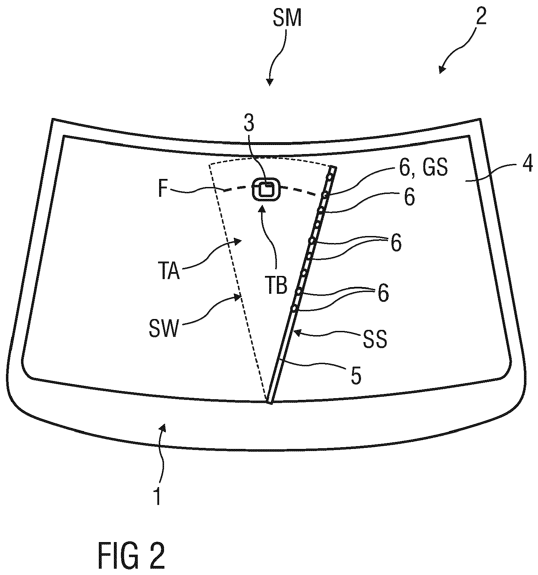

Die Figuren 1 und 2 zeigen beispielhaft zwei Betriebsmodi NM, SM einer Scheibenreinigungsanlage 1 eines Fahrzeugs 2. Dabei zeigt Figur 1 einen Normalbetriebsmodus NM, welcher einem herkömmlichen Betrieb von Scheibenreinigungsanlagen 1 entspricht, und Figur 2 zeigt einen Sonderbetriebsmodus SM.

Das Fahrzeug 2 ist fähig zur Durchführung eines automatisierte, insbesondere hochautomatisierten oder autonomen, Fahrbetriebs. Hierfür weist es eine Sensorik 3 auf, die zur Durchführung dieses automatisierten Fahrbetriebs erforderlich ist. Aus Gründen der Übersichtlichkeit sind vom Fahrzeug 2 nur eine Scheibe 4, die Scheibenreinigungsanlage 1 und die Sensorik 3 dargestellt.

Die Scheibenreinigungsanlage 1 weist mindestens einen Scheibenwischer 5 auf. In einem Verfahren zum Betrieb der Scheibenreinigungsanlage 1 ist vorgesehen, dass der Scheibenwischer 5 im Normalbetriebsmodus NM der Scheibenreinigungsanlage 1 einen vorgegebenen Gesamtabschnitt GA der Scheibe 4 des Fahrzeugs 2 überstreicht. Dieser Gesamtabschnitt GA umfasst einen Sichtbereich eines Fahrzeugnutzers und einen Sichtbereich der Sensorik 3. Die Sensorik 3 ist somit hinter der Scheibe 4, d. h. an einer einem Fahrgastraum zugewandten Innenseite der Scheibe 4, angeordnet. Sie umfasst insbesondere eine Kamera. Die Scheibe 4 ist im dargestellten Beispiel eine Windschutzscheibe des Fahrzeugs 2.

Unter dem Begriff Sichtbereich ist hier insbesondere ein Durchsichtbereich der Scheibe 4 zu verstehen, d. h. der Sichtbereich des Fahrzeugnutzers ist ein Durchsichtbereich der Scheibe 4, welcher zum Hindurchsehen des Fahrzeugnutzers vorgesehen ist, und der Sichtbereich der Sensorik 3 ist ein Durchsichtbereich der Scheibe 4, durch welchen hindurch die Sensorik 3 insbesondere eine äußere Fahrzeugumgebung des Fahrzeugs 2, insbesondere vor dem Fahrzeug 2, erfasst.

Die Scheibenreinigungsanlage 1 ist insbesondere eine Scheibenwisch- und Scheibenwascheinrichtung, welche somit insbesondere eine Reinigungs- und Wischfunktion aufweist.

Zur Reinigung weist die Scheibenreinigungsanlage 1 mehrere Sprühdüsen 6 zum Aufsprühen einer Reinigungsflüssigkeit F auf die Scheibe 4 auf, welche am Scheibenwischer 5, insbesondere an einem Wischerblatt des Scheibenwischers 5, angeordnet sind und insbesondere über eine Länge des Wischerblatts gleichmäßig verteilt sind.

Figur 1 zeigt den Normalbetriebsmodus NM, d. h. der Scheibenwischer 5 überstreicht stets den vorgegebenen Gesamtabschnitt GA der Scheibe 4. Zudem wird die Reinigungsflüssigkeit F stets über alle Sprühdüsen 6 auf den Gesamtabschnitt GA der Scheibe 4 aufgesprüht, d. h. zum Aufsprühen der Reinigungsflüssigkeit F sind oder werden stets alle Sprühdüsen 6 geöffnet.

Die Freihaltung der Sensorik 3 von Wasser, Schnee, Schmutz und anderen Belägen ist für die Durchführung des automatisierten Fahrbetriebs von elementarer Bedeutung. Oft ist dies jedoch problematisch hinsichtlich Zeit, hinsichtlich eines Verbrauchs der Reinigungsflüssigkeit F und/oder hinsichtlich eines Energieverbrauchs der Scheibenreinigungsanlage 1, insbesondere bei schlechten, insbesondere langanhaltend schlechten, Witterungsbedingungen, beispielsweise bei starkem Regen und/oder sonstigen Verschmutzungen, zum Beispiel durch von einer Fahrbahn aufgewirbeltes verschmutztes Wasser.

Um diese Probleme zu vermeiden oder zumindest zu reduzieren, ist im hier beschriebenen Verfahren zum Betrieb der Scheibenreinigungsanlage 1 vorgesehen, dass ermittelt wird, ob sich das Fahrzeug 2 im automatisierten Fahrbetrieb befindet, und ob des Weiteren der Fahrzeugnutzer unaufmerksam ist.

Beispielsweise ist vorgesehen, dass ein ermitteltes Schlafen des Fahrzeugnutzers und/oder ein ermittelter von der Scheibe 4 abgewandter Blick des Fahrzeugnutzers und/oder eine ermittelte nicht vorliegende Fokussierung des Blicks des Fahrzeugnutzers auf eine Fahrzeugumgebung außerhalb des Fahrzeugs 2 vor der Scheibe 4 als Unaufmerksamkeit des Fahrzeugnutzers ermittelt wird. Die Unaufmerksamkeit des Fahrzeugnutzers wird beispielsweise mittels einer Fahrzeugnutzerbeobachtungskamera ermittelt.

Wenn beides ermittelt wird, d. h. wenn ermittelt wird, dass sich das Fahrzeug 2 im automatisierten Fahrbetrieb befindet, und wenn zudem ermittelt wird, dass der Fahrzeugnutzer unaufmerksam ist, wird die Scheibenreinigungsanlage 1 in dem Sonderbetriebsmodus SM betrieben, in welchem der Scheibenwischer 5, wie in Figur 2 beispielhaft gezeigt, ausschließlich einen vorgegebenen Teilabschnitt TA des Gesamtabschnitts GA überstreicht, wobei dieser Teilabschnitt TA den Sichtbereich der Sensorik 3 umfasst. Der Teilabschnitt TA ist somit nur ein Teil des Gesamtabschnitts GA und somit kleiner als der Gesamtabschnitt GA. In anderen Beispielen kann vorgesehen sein, dass der Scheibenwischer 5 diesen Teilabschnitt TA öfter überstreicht als einen restlichen Teil des Gesamtabschnitts GA. Dadurch kann beispielsweise sichergestellt werden, dass sich auch im restlichen Teil des Gesamtabschnitts GA nicht zu viel Schmutz oder Schnee ansammelt, welchen der Scheibenwischer 5 dann im Normalbetriebsmodus NM nicht mehr entfernen kann.

Durch diese Lösung werden die oben genannten Probleme behoben oder zumindest reduziert, da dann, wenn der Fahrzeugnutzer im automatisierten Fahrbetrieb unaufmerksam ist und dessen Sichtbereich daher nicht gereinigt werden muss, ausschließlich oder bevorzugt der Teilabschnitt TA gereinigt wird. Dadurch ist ein Bewegungsweg des Scheibenwischers 5 und somit ein Energieverbrauch der Scheibenreinigungsanlage 1 geringer, der Scheibenwischer 5 kann den Teilabschnitt TA bei gleicher Geschwindigkeit öfter überstreichen und ein Verbrauch von Reinigungsflüssigkeit F kann reduziert werden, wodurch ein geringerer Vorrat an Reinigungsflüssigkeit F mitgeführt werden muss und ein kleinerer bauraumsparender Reinigungsflüssigkeitstank verbaut werden kann, oder bei gleichbleibendem Vorrat eine größere Reichweite des Fahrzeugs 2 ohne Nachfüllen der Reinigungsflüssigkeit F ermöglicht wird.

Das beschriebene Verfahren ermöglicht somit eine höhere Effizienz bezüglich des Freihaltens der Sensorik 3. Beispielsweise kann bei starkem Regen die Sensorik 3 schneller freigehalten werden, wenn dies sonst durch eine maximal mögliche Geschwindigkeit der Bewegung des Scheibenwischers 5 limitiert wäre. Dadurch kann eine Verfügbarkeit des automatisierten Fahrbetriebs erhöht werden, da dieser dann auch bei starkem Regen durchgeführt werden kann.

In dem hier beschriebenen Verfahren ist insbesondere vorgesehen, dass der Scheibenwischer 5, wie in Figur 1 gezeigt, im Normalbetriebsmodus NM von einer vorgegebenen Normalstartposition NS zu einer vorgegebenen Normalwendeposition NW und zurück bewegt wird, insbesondere mehrfach, insbesondere fortlaufend oder als Intervallbewegung, und im Sonderbetriebsmodus SM von einer vorgegebenen Sonderstartposition SS zu einer vorgegebenen Sonderwendeposition SW und zurück bewegt wird, insbesondere mehrfach, insbesondere fortlaufend oder als Intervallbewegung, wie in Figur 2 gezeigt. Dabei ist der Bewegungsweg, insbesondere ein Schwenkweg, des Scheibenwischers 5 von der Sonderstartposition SS zu der Sonderwendeposition SW geringer als von der Normalstartposition NS zu der Normalwendeposition NW.

Im hier dargestellten Beispiel weicht die Sonderstartposition SS von der Normalstartposition NS ab und die Sonderwendeposition SW weicht von der Normalwendeposition NW ab, wie aus dem Vergleich der Figuren 1 und 2 ersichtlich. Die Sonderstartposition SS ist dabei in Richtung der Normalwendeposition NW versetzt positioniert und die Sonderwendeposition SW ist in Richtung der Normalstartposition NS versetzt positioniert.

In anderen Beispielen kann beispielsweise vorgesehen sein, dass die Sonderstartposition SS der Normalstartposition NS entspricht und die Sonderwendeposition SW von der Normalwendeposition NW abweicht, oder dass die Sonderwendeposition SW der Normalwendeposition NW entspricht und die Sonderstartposition SS von der Normalstartposition NS abweicht.

Die Sonderstartposition SS und die Sonderwendeposition SW und somit der Teilabschnitt TA werden insbesondere derart vorgegeben, dass der Teilabschnitt TA den Sichtbereich der Sensorik 3 vollständig umfasst und möglichst klein ist, um die oben beschriebenen Vorteile optimal zu erreichen.

In der mittels der Figuren 1 und 2 beispielhaft dargestellten Ausführungsform des Verfahrens ist insbesondere vorgesehen, dass der Scheibenwischer 5 zu Beginn des Sonderbetriebsmodus SM von der Normalstartposition NS zur Sonderstartposition SS bewegt wird und während des Sonderbetriebsmodus SM ausschließlich in der Sonderstartposition SS angehalten wird. Im Normalbetriebsmodus NM befindet sich der Scheibenwischer 5 somit, wenn er stillsteht, in der Normalstartposition NS. Bei Wechsel in den Sonderbetriebsmodus SM ist somit zunächst das Bewegen des Scheibenwischers 5

in die Sonderstartposition SS erforderlich. Er kehrt dann während des Sonderbetriebsmodus SM nicht in die Normalstartposition NS zurück, d. h. auch nicht im Stillstand, sondern verbleibt im Stillstand in der Sonderstartposition SS. Erst bei Beendigung des Sonderbetriebsmodus SM, d. h. wenn die oben genannten Bedingungen für den Sonderbetriebsmodus SM nicht mehr erfüllt sind, wird der Scheibenwischer 5 wieder in die Normalstartposition NS zurückbewegt.

In einer möglichen Ausführungsform des Verfahrens kann vorgesehen sein, dass im Sonderbetriebsmodus SM die oben bereits erwähnte Reinigungsflüssigkeit F ausschließlich auf den Teilabschnitt TA aufgesprüht wird oder mehr Reinigungsflüssigkeit F auf den Teilabschnitt TA als auf den restlichen Teil des Gesamtabschnitts GA aufgesprüht wird oder die Reinigungsflüssigkeit F öfter auf den Teilabschnitt TA als auf den restlichen Teil des Gesamtabschnitts GA aufgesprüht wird.

In der mittels der Figuren 1 und 2 beispielhaft dargestellten Ausführungsform des Verfahrens ist zur weiteren Reduzierung des Verbrauchs der Reinigungsflüssigkeit F vorgesehen, dass im Sonderbetriebsmodus SM die Reinigungsflüssigkeit F ausschließlich auf einen Teilbereich TB des Teilabschnitts TA aufgesprüht wird, wobei dieser Teilbereich TB den Sichtbereich der Sensorik 3 umfasst, wie in Figur 2 gezeigt. Der Teilbereich TB ist somit nur ein Teil des Teilabschnitts TA und somit kleiner als der Teilabschnitt TA. Im dargestellten Beispiel ist dieser Teilbereich TB ein oberer Bereich des Teilabschnitts TA auf der Scheibe 4, da sich in diesem oberen Bereich des Teilabschnitts TA der Sichtbereich der Sensorik 3 befindet.

In anderen Beispielen kann beispielsweise vorgesehen sein, dass im Sonderbetriebsmodus SM mehr Reinigungsflüssigkeit F auf den Teilbereich TB des Teilabschnitts TA als auf den restlichen Teil des Teilabschnitts TA und/oder den restlichen Teil des Gesamtabschnitts GA aufgesprüht wird oder die Reinigungsflüssigkeit F öfter auf den Teilbereich TB des Teilabschnitts TA als auf den restlichen Teil des Teilabschnitts TA und/oder den restlichen Teil des Gesamtabschnitts GA aufgesprüht wird. Dadurch kann beispielsweise eine zu starke Schmutzansammlung im restlichen Teil des Teilabschnitts TA und/oder im restlichen Teil des Gesamtabschnitts GA vermieden werden.

Da durch die beschriebene Vorgehensweise vorteilhafterweise nur noch oder zumindest bevorzugt der relativ kleine Teilbereich TB des Teilabschnitts TA mit der Reinigungsflüssigkeit F besprüht wird, kann der Verbrauch der Reinigungsflüssigkeit F weiter reduziert werden. Dadurch werden die oben bereits erwähnten Vorteile bezüglich des kleineren erforderlichen Vorrats oder der längeren Reichweite bei gleichem Vorrat erzielt.

Das Versprühen der Reinigungsflüssigkeit F erfolgt insbesondere automatisch, insbesondere durch Steuern und/oder Regeln einer Förderpumpe für die Reinigungsflüssigkeit F und/oder durch Steuern und/oder Regeln einer oder mehrerer Sprühdüsen 6, insbesondere eines Öffnens und Schließens der jeweiligen Sprühdüse 6.

In einer möglichen Ausführungsform des Verfahrens kann vorgesehen sein, dass im Sonderbetriebsmodus SM die Reinigungsflüssigkeit F ausschließlich aus der Sprühdüse 6 oder aus den Sprühdüsen 6 auf die Scheibe 4 aufgesprüht wird, die sich über den Teilabschnitt TA hinwegbewegt/hinwegbewegen. In der mittels der Figuren 1 und 2 beispielhaft dargestellten Ausführungsform des Verfahrens ist, um möglichst wenig Reinigungsflüssigkeit F gezielt auf den Sichtbereich der Sensorik 3 aufzusprühen, vorgesehen, dass im Sonderbetriebsmodus SM die Reinigungsflüssigkeit F ausschließlich aus der Sprühdüse 6 oder aus den Sprühdüsen 6 auf die Scheibe 4 aufgesprüht wird, die sich über den Teilbereich TB des Teilabschnitts TA hinwegbewegt/hinwegbewegen. Im dargestellten Beispiel ist dies nur eine Sprühdüse 6, welche hierfür geöffnet wird, um die Reinigungsflüssigkeit F zu versprühen. In Figur 2 sind diese geöffnete Sprühdüse GS und die durch sie versprühte Reinigungsflüssigkeit F dargestellt.

Mittels des hier beschriebenen Verfahrens wird somit bei starkem Regen und, wenn die oben genannten Bedingungen bezüglich des Fahrzeugnutzers und des automatisierten Fahrbetriebs erfüllt sind, die Scheibenreinigungsanlage 1, insbesondere deren Scheibenwischer 5, automatisch aktiviert und zudem der Sonderbetriebsmodus SM automatisch aktiviert. Der Scheibenwischer 5, genauer gesagt ein Motor zum Bewegen des Scheibenwischers 5, wird derart gesteuert und/oder geregelt, dass der Scheibenwischer 5 nur von der Sonderstartposition SS zur Sonderwendeposition SW und zurück bewegt wird, wobei er beispielsweise zu Beginn zunächst aus der Normalstartposition NS in die Sonderstartposition SS bewegt wird. Durch diese Bewegung des Scheibenwischers 5 von der Sonderstartposition SS zur Sonderwendeposition SW und zurück wird der Sichtbereich der Sensorik 3 vom Scheibenwischer 5 überwischt und somit gereinigt. Angehalten wird der Scheibenwischer 5 vorteilhafterweise in der Sonderstartposition SS. Er wird vorteilhafterweise erst bei Beendigung des Sonderbetriebsmodus SM, d. h. bei der Rückkehr in den Normalbetriebsmodus NM, in die Normalstartposition NS zurückbewegt.

Wird die Scheibe 4 als verdreckt erkannt, wird mittels des hier beschriebenen Verfahrens, wenn die oben genannten Bedingungen bezüglich des Fahrzeugnutzers und des automatisierten Fahrbetriebs erfüllt sind, die Scheibenreinigungsanlage 1, insbesondere deren Scheibenwischer 5, sowie die Sprühfunktion zum Versprühen der Reinigungsflüssigkeit F automatisch aktiviert und zudem der Sonderbetriebsmodus SM automatisch aktiviert, wobei die Reinigungsflüssigkeit F nur auf den Teilbereich **TB** des Teilabschnitts TA und somit auf den Sichtbereich der Sensorik 3 aufgesprüht wird, indem nur diejenigen Sprühdüsen 6 geöffnet werden, die diesen Teilbereich **TB** besprühen, im dargestellten Beispiel nur die eine als geöffnete Sprühdüse GS gekennzeichnete Sprühdüse 6, und vorteilhafterweise nur dann, wenn der Scheibenwischer 5 diesen Teilbereich **TB** des Teilabschnitts TA überstreicht.

## Patentansprüche

1. Verfahren zum Betrieb einer Scheibenreinigungsanlage (1) eines Fahrzeugs (2), wobei die Scheibenreinigungsanlage (1) mindestens einen Scheibenwischer (5) aufweist, der in einem Normalbetriebsmodus (NM) der Scheibenreinigungsanlage (1) einen vorgegebenen Gesamtabschnitt (GA) einer Scheibe (4) des Fahrzeugs (2) überstreicht,
**dadurch gekennzeichnet, dass**
- der vorgegebene Gesamtabschnitt (GA) einen Sichtbereich eines Fahrzeugnutzers und einen Sichtbereich einer Sensorik (3), die zur Durchführung eines automatisierten Fahrbetriebs des Fahrzeugs (2) erforderlich ist, umfasst,
- wenn ermittelt wird, dass sich das Fahrzeug (2) im automatisierten Fahrbetrieb befindet, und wenn zudem ermittelt wird, dass der Fahrzeugnutzer unaufmerksam ist,
die Scheibenreinigungsanlage (1) in einem Sonderbetriebsmodus (SM) betrieben wird, in welchem der Scheibenwischer (5) ausschließlich einen vorgegebenen Teilabschnitt (TA) des Gesamtabschnitts (GA) überstreicht oder diesen Teilabschnitt (TA) öfter überstreicht als einen restlichen Teil des Gesamtabschnitts (GA), wobei dieser Teilabschnitt (TA) den Sichtbereich der Sensorik (3) umfasst.

2. Verfahren nach Anspruch 1,
**dadurch gekennzeichnet, dass** der Scheibenwischer (5) im Normalbetriebsmodus (NM) von einer vorgegebenen Normalstartposition (NS) zu einer vorgegebenen Normalwendeposition (NW) und zurück bewegt wird und im Sonderbetriebsmodus (SM) von einer vorgegebenen Sonderstartposition (SS) zu einer vorgegebenen Sonderwendeposition (SW) und zurück bewegt wird, wobei ein Bewegungsweg des Scheibenwischers (5) von der Sonderstartposition (SS) zu der Sonderwendeposition (SW) geringer ist als von der Normalstartposition (NS) zu der Normalwendeposition (NW).

3. Verfahren nach Anspruch 2,
**dadurch gekennzeichnet, dass**
- die Sonderstartposition (SS) der Normalstartposition (NS) entspricht und die Sonderwendeposition (SW) von der Normalwendeposition (NW) abweicht, oder
- die Sonderwendeposition (SW) der Normalwendeposition (NW) entspricht und die Sonderstartposition (SS) von der Normalstartposition (NS) abweicht, oder
- die Sonderstartposition (SS) von der Normalstartposition (NS) abweicht und die Sonderwendeposition (SW) von der Normalwendeposition (NW) abweicht.

4. Verfahren nach Anspruch 2 oder 3,
**dadurch gekennzeichnet, dass** der Scheibenwischer (5) zu Beginn des Sonderbetriebsmodus (SM) von der Normalstartposition (NS) zur Sonderstartposition (SS) bewegt wird und während des Sonderbetriebsmodus (SM) ausschließlich in der Sonderstartposition (SS) angehalten wird.

5. Verfahren nach einem der vorhergehenden Ansprüche,
**dadurch gekennzeichnet, dass** im Sonderbetriebsmodus (SM) eine Reinigungsflüssigkeit (F) ausschließlich auf den Teilabschnitt (TA) aufgesprüht wird oder mehr Reinigungsflüssigkeit (F) auf den Teilabschnitt (TA) als auf den restlichen Teil des Gesamtabschnitts (GA) aufgesprüht wird oder die Reinigungsflüssigkeit (F) öfter auf den Teilabschnitt (TA) als auf den restlichen Teil des Gesamtabschnitts (GA) aufgesprüht wird.

6. Verfahren nach Anspruch 5,
**dadurch gekennzeichnet, dass** im Sonderbetriebsmodus (SM) die Reinigungsflüssigkeit (F) ausschließlich auf einen Teilbereich (TB) des Teilabschnitts (TA) aufgesprüht wird oder mehr Reinigungsflüssigkeit (F) auf den Teilbereich (TB) des Teilabschnitts (TA) als auf den restlichen Teil des Teilabschnitts (TA) und/oder den restlichen Teil des Gesamtabschnitts (GA) aufgesprüht wird oder die Reinigungsflüssigkeit (F) öfter auf den Teilbereich (TB) des Teilabschnitts (TA) als auf den restlichen Teil des Teilabschnitts (TA) und/oder den restlichen Teil des Gesamtabschnitts (GA) aufgesprüht wird, wobei dieser Teilbereich (TB) den Sichtbereich der Sensorik (3) umfasst.

7. Verfahren nach Anspruch 5 oder 6,
**dadurch gekennzeichnet, dass** am Scheibenwischer (5) mehrere Sprühdüsen (6) zum Aufsprühen der Reinigungsflüssigkeit (F) auf die Scheibe (4) angeordnet sind, wobei im Sonderbetriebsmodus (SM) die Reinigungsflüssigkeit (F) ausschließlich aus der Sprühdüse (6) oder aus den Sprühdüsen (6) auf die Scheibe (4) aufgesprüht wird, die sich über den Teilabschnitt (TA) hinwegbewegt/hinwegbewegen.

8. Verfahren nach Anspruch 7,
**dadurch gekennzeichnet, dass** im Sonderbetriebsmodus (SM) die Reinigungsflüssigkeit (F) ausschließlich aus der Sprühdüse (6) oder aus den Sprühdüsen (6) auf die Scheibe (4) aufgesprüht wird, die sich über den Teilbereich (TB) des Teilabschnitts (TA) hinwegbewegt/hinwegbewegen.

9. Verfahren nach einem der vorhergehenden Ansprüche,
**dadurch gekennzeichnet, dass** ein ermitteltes Schlafen des Fahrzeugnutzers und/oder ein ermittelter von der Scheibe (4) abgewandter Blick des Fahrzeugnutzers und/oder eine ermittelte nicht vorliegende Fokussierung des Blicks des Fahrzeugnutzers auf eine Fahrzeugumgebung außerhalb des Fahrzeugs (2) vor der Scheibe (4) als Unaufmerksamkeit des Fahrzeugnutzers ermittelt wird.

10. Verfahren nach einem der vorhergehenden Ansprüche,
**dadurch gekennzeichnet, dass** die Unaufmerksamkeit des Fahrzeugnutzers mittels einer Fahrzeugnutzerbeobachtungskamera ermittelt wird.

## Claims

1. Method for operating a windshield cleaning system (1) of a vehicle (2),
the windshield cleaning system (1) having at least one windshield wiper (5) which, in a normal operating mode (NM) of the windshield cleaning system (1), brushes over a predetermined total portion (GA) of a windshield (4) of the vehicle (2),
**characterized in that**
- the predetermined total portion (GA) comprises a field of vision of a vehicle user and a field of vision of a sensor system (3) required to implement an automated driving mode of the vehicle (2),
- if it is determined that the vehicle (2) is in the automated driving mode, and if it is also determined that the vehicle user is inattentive, the windshield cleaning system (1) is operated in a special operating mode (SM) in which the windshield wiper (5) exclusively brushes over a predetermined subportion (TA) of the total portion (GA) or brushes over this subportion (TA) more often than a remaining part of the total portion (GA), this subportion (TA) comprising the field of vision of the sensor system (3).

2. Method according to claim 1,
**characterized in that** the windshield wiper (5) is moved, in the normal operating mode (NM), from a predetermined normal starting position (NS) to a predetermined normal turning position (NW) and back and, in the special operating mode (SM), is moved from a predetermined special starting position (SS) to a predetermined special turning position (SW) and back, the movement path of the windshield wiper (5) from the special starting position (SS) to the special turning position (SW) being smaller than from the normal starting position (NS) to the normal turning position (NW).

3. Method according to claim 2,
**characterized in that**
- the special starting position (SS) corresponds to the normal starting position (NS) and the special turning position (SW) differs from the normal turning position (NW), or
- the special turning position (SW) corresponds to the normal turning position (NW) and the special starting position (SS) differs from the normal starting position (NS), or
- the special starting position (SS) differs from the normal starting position (NS) and the special turning position (SW) differs from the normal turning position (NW).

4. Method according to claim 2 or 3,
**characterized in that** the windshield wiper (5) is moved from the normal starting position (NS) to the special starting position (SS) at the beginning of the special operating mode (SM) and is held exclusively in the special starting position (SS) during the special operating mode (SM).

5. Method according to any of the preceding claims,
**characterized in that** in the special operating mode (SM), a cleaning liquid (F) is sprayed exclusively onto the subportion (TA), or more cleaning liquid (F) is sprayed onto the subportion (TA) than onto the remaining part of the total portion (GA), or the cleaning liquid (F) is sprayed more often onto the subportion (TA) than onto the remaining part of the total portion (GA).

6. Method according to claim 5,
**characterized in that** in the special operating mode (SM), the cleaning liquid (F) is sprayed exclusively onto a subregion (TB) of the subportion (TA) or more cleaning liquid (F) is sprayed onto the subregion (TB) of the subportion (TA) than onto the remaining part of the subportion (TA) and/or the remaining part of the total portion (GA) or the cleaning liquid (F) is sprayed more often onto the subregion (TB) of the subportion (TA) than onto the remaining part of the subportion (TA) and/or the remaining part of the total portion (GA), this subregion (TB) comprising the field of vision of the sensor system (3).

7. Method according to claim 5 or 6,
**characterized in that** a plurality of spray nozzles (6) are arranged on the windshield wiper (5) to spray the cleaning liquid (F) onto the windshield (4), wherein, in the special operating mode (SM), the cleaning liquid (F) is sprayed onto the windshield (4) exclusively from the spray nozzle (6) or from the spray nozzles (6) which move(s) over the subportion (TA).

8. Method according to claim 7,
**characterized in that** in the special operating mode (SM), the cleaning liquid (F) is sprayed onto the windshield (4) exclusively from the spray nozzle (6) or from the spray nozzles (6) which move(s) over the subregion (TB) of the subportion (TA).

9. Method according to any of the preceding claims,
**characterized in that** determined sleeping of the vehicle user and/or a determined gaze of the vehicle user turned away from the windshield (4) and/or a determined lack of focus of the vehicle user's gaze on a vehicle environment outside the vehicle (2) in front of the windshield (4) is determined as inattention of the vehicle user.

10. Method according to any of the preceding claims,
**characterized in that** the inattentiveness of the vehicle user is determined by means of a vehicle user monitoring camera.

## Revendications

1. Procédé permettant de faire fonctionner un système de nettoyage de vitre (1) d'un véhicule (2),
dans lequel le système de nettoyage de vitre (1) présente au moins un essuie-glace (5) qui, dans un mode de fonctionnement normal (NM) du système de nettoyage de vitre (1), balaie une section totale (GA) prédéfinie d'une vitre (4) du véhicule (2),
**caractérisé en ce que**
- la section totale (GA) prédéfinie comprend un champ de vision d'un utilisateur de véhicule et un champ de vision d'un système de capteurs (3), qui est nécessaire à la réalisation d'un fonctionnement de conduite automatisé du véhicule (2),
- s'il est déterminé que le véhicule (2) est dans le fonctionnement de conduite automatisé, et s'il est en outre déterminé que l'utilisateur de véhicule n'est pas attentif, le système de nettoyage de vitre (1) est amené à fonctionner dans un mode de fonctionnement spécial (SM) dans lequel l'essuie-glace (5) balaie exclusivement une section partielle (TA) prédéfinie de la section totale (GA) ou balaie cette section partielle (TA) plus souvent qu'une partie restante de la section totale (GA), dans lequel cette section partielle (TA) comprend le champ de vision du système de capteurs (3).

2. Procédé selon la revendication 1,
**caractérisé en ce que** l'essuie-glace (5) est déplacé, dans le mode de fonctionnement normal (NM), d'une position de départ normale (NS) prédéfinie vers une position de retournement normale (NW) prédéfinie et inversement, et, dans le mode de fonctionnement spécial (SM), d'une position de départ spéciale (SS) prédéfinie vers une position de retournement spéciale (SW) prédéfinie et inversement, dans lequel une course de déplacement de l'essuie-glace (5) de la position de départ spéciale (SS) à la position de retournement spéciale (SW) est inférieure à celle de la position de départ normale (NS) à la position de retournement normale (NW).

3. Procédé selon la revendication 2,
**caractérisé en ce que**
- la position de départ spéciale (SS) correspond à la position de départ normale (NS) et la position de retournement spéciale (SW) diffère de la position de retournement normale (NW), ou
- la position de retournement spéciale (SW) correspond à la position de retournement normale (NW) et la position de départ spéciale (SS) diffère de la position de départ normale (NS), ou
- la position de départ spéciale (SS) diffère de la position de départ normale (NS) et la position de retournement spéciale (SW) diffère de la position de retournement normale (NW).

4. Procédé selon la revendication 2 ou 3,
**caractérisé en ce que** l'essuie-glace (5), au début du mode de fonctionnement spécial (SM), est déplacé de la position de départ normale (NS) vers la position de départ spéciale (SS) et, pendant le mode de fonctionnement spécial (SM), il est maintenu exclusivement dans la position de départ spéciale (SS).

5. Procédé selon l'une des revendications précédentes,
**caractérisé en ce que,** dans le mode de fonctionnement spécial (SM), un liquide de nettoyage (F) est pulvérisé exclusivement sur la section partielle (TA), ou bien une plus grande quantité de liquide de nettoyage (F) est pulvérisée sur la section partielle (TA) que sur la partie restante de la section totale (GA), ou le liquide de nettoyage (F) est pulvérisé plus souvent sur la section partielle (TA) que sur la partie restante de la section totale (GA).

6. Procédé selon la revendication 5,
**caractérisé en ce que,** dans le mode de fonctionnement spécial (SM), le liquide de nettoyage (F) est pulvérisé exclusivement sur une zone partielle (TB) de la section partielle (TA), ou bien une plus grande quantité de liquide de nettoyage (F) est pulvérisée sur la zone partielle (TB) de la section partielle (TA) que sur la partie restante de la section partielle (TA) et/ou la partie restante de la section totale (GA) ou le liquide de nettoyage (F) est pulvérisé plus souvent sur la zone partielle (TB) de la section partielle (TA) que sur la partie restante de la section partielle (TA) et/ou
la partie restante de la section totale (GA), dans lequel cette zone partielle (TB) comprend la zone de vision du système de capteurs (3).

7. Procédé selon la revendication 5 ou 6,
**caractérisé en ce que,** sur l'essuie-glace (5) sont agencées plusieurs buses de pulvérisation (6) destinées à pulvériser le liquide de nettoyage (F) sur la vitre (4), dans lequel, dans le mode de fonctionnement spécial (SM), le liquide de nettoyage (F) est pulvérisé exclusivement à partir de la buse de pulvérisation (6) ou à partir des buses de pulvérisation (6) sur la vitre (4), qui se déplace/se déplacent au-dessus de la section partielle (TA).

8. Procédé selon la revendication 7,
**caractérisé en ce que,** dans le mode de fonctionnement spécial (SM), le liquide de nettoyage (F) est pulvérisé exclusivement à partir de la buse de pulvérisation (6) ou à partir des buses de pulvérisation (6) sur la vitre (4) qui se déplace/se déplacent au-dessus de la zone partielle (TB) de la section partielle (TA).

9. Procédé selon l'une des revendications précédentes,
**caractérisé en ce qu'un** endormissement déterminé de l'utilisateur de véhicule et/ou un regard de l'utilisateur de véhicule déterminé détourné de la vitre (4) et/ou une absence déterminée de focalisation du regard de l'utilisateur de véhicule sur un environnement de véhicule à l'extérieur du véhicule (2) devant la vitre (4) sont déterminés comme un manque d'attention de la part de l'utilisateur de véhicule.

10. Procédé selon l'une des revendications précédentes,
**caractérisé en ce que** le manque d'attention de l'utilisateur de véhicule est déterminé par le biais d'une caméra d'observation d'utilisateur de véhicule.
